# FASCICULE DE BREVET EUROPEEN

(11) **EP 4 430 538 B1**
(45) Date de publication et mention de la délivrance du brevet: **14.01.2026**
(21) Numéro de dépôt: 22814079.4
(22) Date de dépôt: 09.11.2022
(51) Int. Cl.: B64F 5/60, G06Q 10/00, G06Q 10/08, G06Q 10/0875, G06Q 10/20, B64F 5/40

(54) **PROCÉDÉ DE SUIVI DE LA CONFIGURATION D'UN MOTEUR D'AÉRONEF ET SYSTÈME ASSOCIÉ**
VERFAHREN ZUR ÜBERWACHUNG DER KONFIGURATION EINES FLUGZEUGMOTORS UND ZUGEHÖRIGES SYSTEM
METHOD FOR MONITORING THE CONFIGURATION OF AN AIRCRAFT ENGINE, AND ASSOCIATED SYSTEM

(30) Priorité: 10.11.2021 FR 2111912
(43) Date de publication de la demande: 18.09.2024
(73) Titulaire: Safran Aircraft Engines, 75015 Paris (FR)
(72) Inventeur: LHOMMEAU, Tony Alain Roger Joël, 77550 MOISSY-CRAMAYEL (FR); GARNIER, Alméric Pierre Louis, 77550 MOISSY-CRAMAYEL (FR)
(74) Mandataire: Cabinet Camus Lebkiri
(86) Numéro de dépôt international: PCT/EP2022/081347
(87) Numéro de publication internationale: WO 2023/083901

(56) Documents cités:
- US-A1- 2004 024 501
- US-A1- 2007 114 280
- US-A1- 2018 322 714

## Description

### DOMAINE TECHNIQUE DE L'INVENTION

Le domaine technique de l'invention est celui des moteurs d'aéronef et plus particulièrement celui du suivi de la configuration des moteurs d'aéronef.

La présente invention concerne un procédé de suivi de la configuration d'un moteur d'aéronef. La présente invention concerne également un système de suivi de la configuration d'un moteur d'aéronef, un produit-programme d'ordinateur et un support d'enregistrement.

### ARRIERE-PLAN TECHNOLOGIQUE DE L'INVENTION

Pour être autorisée à faire voler un aéronef, une compagnie aérienne doit connaître la configuration de chaque moteur de l'aéronef, c'est-à-dire la liste comportant l'ensemble unique de données d'identification, comprenant par exemple le numéro de série et la référence appelés respectivement Serial Number et Part Number en anglais, de chaque équipement monté sur le moteur.

Un écart entre la configuration certifiée et la configuration réelle du moteur étant considéré comme de la responsabilité de l'exploitant, les opérations d'inventaire permettant de connaître la configuration d'un moteur sont réalisées par un opérateur humain qui s'identifie et signe l'inventaire réalisé. L'inventaire étant réalisé manuellement, l'opération est donc longue et fastidieuse.

Pour remédier à cet inconvénient, il est connu de placer une étiquette RFID sur chaque équipement du moteur et d'en réaliser une lecture automatique pour générer automatiquement un inventaire du moteur. Il est alors possible de connaître en temps réel la configuration du moteur et donc de mieux connaître ses évolutions, ce qui a notamment un intérêt pour la planification des opérations de contrôle et de maintenance du moteur.

Cependant, les informations fournies par lecture automatique peuvent être erronées, par exemple dans le cas où une étiquette RFID d'un équipement retiré du moteur est tombée dans le moteur ou encore dans le cas où un équipement muni d'une étiquette RFID est situé à proximité du moteur lors de la lecture automatique. Une validation par un opérateur humain est donc nécessaire pour respecter la réglementation, ce qui limite considérablement les avantages du recours à un inventaire automatique.

Il existe donc un besoin de connaître de manière fiable la configuration d'un moteur d'aéronef en diminuant la durée de réalisation de l'inventaire du moteur.

### RESUME DE L'INVENTION

L'invention offre une solution aux problèmes évoqués précédemment, en permettant de suivre de manière fiable la configuration d'un moteur d'aéronef en limitant le nombre d'étapes nécessitant l'intervention d'un opérateur humain.

Un premier aspect de l'invention concerne un procédé de suivi de la configuration d'un moteur d'aéronef comprenant une pluralité d'équipements, chaque équipement présentant un dispositif de radio-identification, le moteur étant associé à une configuration de référence comprenant une date de dernière mise à jour et pour chaque équipement, un ensemble de données d'identification de référence de l'équipement, le procédé comportant les étapes suivantes :
- Lecture automatique de chaque dispositif de radio-identification pour obtenir une configuration comprenant au moins un ensemble de données d'identification lu pour chaque équipement et une date de réalisation ;
- Pour chaque équipement, comparaison entre l'ensemble de données d'identification lu et l'ensemble de données d'identification de référence correspondant à l'équipement :
   - Si pour chaque équipement, l'ensemble de données d'identification lu est identique à l'ensemble de données d'identification de référence, remplacement de la date de dernière mise à jour de la configuration de référence par la date de réalisation de la configuration obtenue ;
   - Sinon, pour chaque équipement pour lequel l'ensemble de données d'identification lu est différent de l'ensemble de données d'identification de référence :
      - Si une opération de remplacement de l'équipement a eu lieu entre la date de dernière mise à jour et la date de réalisation et que l'ensemble de données d'identification lu correspond à un ensemble de données d'identification de remplacement associé à l'opération de remplacement, remplacement de l'ensemble de données d'identification de référence par l'ensemble de données d'identification lu ;
      - Sinon, génération d'une alerte ;
- Si au moins un ensemble de données d'identification de référence a été remplacé, remplacement de la date de dernière mise à jour de la configuration de référence par la date de réalisation de la configuration obtenue.

Grâce à l'invention, un inventaire d'un moteur d'aéronef est réalisé automatiquement à l'aide de dispositifs de radio-identification installés sur les équipements du moteur, pour obtenir une configuration du moteur.

La configuration obtenue est ensuite comparée à une configuration de référence du moteur correspondant à une configuration récente certifiée pour le moteur, c'est-à-dire à une configuration récente validée par un opérateur humain pour le moteur.

Si un écart est constaté entre la configuration obtenue et la configuration de référence, c'est-à-dire s'il existe un équipement pour lequel l'ensemble de données d'identification lu obtenu par lecture du dispositif d'identification correspondant est différent de l'ensemble de données d'identification associé à l'équipement dans la configuration de référence, la liste des opérations de remplacement ayant eu lieu entre la date associée à la configuration de référence et la date associée à la configuration obtenue pour l'équipement est consultée. Chaque opération de remplacement est certifiée et associée à un ensemble de données d'identification de l'équipement monté lors de l'opération de remplacement.

Si l'ensemble de données d'identification lu pour l'équipement correspond à l'ensemble de données d'identification de l'équipement monté lors d'une opération de remplacement comprise dans la liste, l'écart est considéré comme justifié et la configuration de référence est mise à jour avec l'ensemble de données d'identification lu pour l'équipement.

Si l'écart ne peut pas s'expliquer par une opération de remplacement, il est considéré comme non justifié et une alerte est émise.

Ainsi, un opérateur humain n'interviendra dans l'opération d'inventaire du moteur que s'il existe un écart non justifié par une opération de remplacement certifiée, entre la configuration obtenue automatiquement par radio-identification et la configuration de référence certifiée. Le nombre d'interventions humaines est donc considérablement réduit sans diminuer la fiabilité de la configuration obtenue puisque celle-ci est vérifiée en prenant uniquement en compte des données certifiées.

Outre les caractéristiques qui viennent d'être évoquées dans le paragraphe précédent, le procédé selon l'invention peut présenter une ou plusieurs caractéristiques complémentaires parmi les suivantes, considérées individuellement ou selon toutes les combinaisons techniquement possibles.

Selon une variante de réalisation, la configuration de référence est stockée dans une base de données de configuration, le procédé selon l'invention comprenant en outre une étape de stockage de la configuration obtenue dans une base de données tampon indépendante de la base de données de configuration.

Ainsi, les données non certifiées de la configuration obtenue ne sont pas mélangées avec les données certifiées de la configuration de référence, ce qui permet d'éviter des problèmes de sécurité.

Selon une sous-variante de réalisation de la variante de réalisation précédente, le procédé selon l'invention comprend en outre une étape de suppression de la configuration obtenue de la base de données tampon.

Ainsi, les données non certifiées de la configuration obtenue ne sont pas conservées.

Un deuxième aspect de l'invention concerne un système de suivi de la configuration d'un moteur d'aéronef comprenant une pluralité d'équipements, chaque équipement présentant un dispositif de radio-identification, le système comprenant :
- Un module de lecture radio configuré pour lire automatiquement pour chaque équipement, le dispositif de radio-identification correspondant pour obtenir un ensemble de données d'identification lu pour l'équipement ;
- Une base de données de configuration configurée pour stocker une configuration de référence associée au moteur, la configuration de référence comprenant une date de dernière mise à jour et pour chaque équipement, un ensemble de données d'identification de référence de l'équipement ;
- Une base de données tampon configurée pour stocker une configuration comprenant une date de réalisation et chaque ensemble de données d'identification lu obtenu à l'aide du module de lecture radio, la base de données tampon étant indépendante de la base de données de configuration ;
- Un module de traitement configuré pour, pour chaque équipement, comparer l'ensemble de données d'identification lu et l'ensemble de données d'identification de référence correspondant à l'équipement :
   - Si pour chaque équipement, l'ensemble de données d'identification lu est identique à l'ensemble de données d'identification de référence, remplacer la date de dernière mise à jour de la configuration de référence par la date de réalisation de la configuration ;
   - Sinon, pour chaque équipement pour lequel l'ensemble de données d'identification lu est différent de l'ensemble de données d'identification de référence :
      - Si une opération de remplacement de l'équipement a eu lieu entre la date de dernière mise à jour et la date de réalisation et que l'ensemble de données d'identification lu correspond à un ensemble de données d'identification de remplacement associé à l'opération de remplacement, remplacer l'ensemble de données d'identification de référence par l'ensemble de données d'identification lu ;
      - Sinon, générer une alerte ;
   - Si au moins un ensemble de données d'identification de référence a été remplacé, remplacer la date de dernière mise à jour de la configuration de référence par la date de réalisation de la configuration.

Selon une variante de réalisation, la base de données de configuration est chiffrée et/ou présente un contrôle d'accès par authentification.

Ainsi, la base de données de configuration comprenant des données certifiées est sécurisée.

Selon une variante de réalisation compatible avec la variante de réalisation précédente, le système selon l'invention comprend un réseau de télécommunications configuré pour permettre les échanges de messages entre le module de lecture radio et la base de données tampon, et entre le module de traitement, la base de données de configuration et la base de données tampon, via un protocole de communication.

Selon une sous-variante de réalisation de la variante de réalisation précédente, le protocole de communication est chiffré de bout en bout.

Ainsi, les communications entre les différents éléments du système selon l'invention sont sécurisées.

Selon une sous-variante de réalisation de la variante de réalisation précédente compatible avec la sous-variante de réalisation précédente, le réseau de télécommunications comprend au moins un nœud de télécommunications, chaque nœud de télécommunications stockant une copie synchronisée d'un contrat autoexécutant configuré pour vérifier la validité des messages transmis au sein du réseau de télécommunications.

Ainsi, un consensus sur chaque message transmis est assuré.

Un troisième aspect de l'invention concerne un produit-programme d'ordinateur comprenant des instructions qui, quand le programme est exécuté sur un ordinateur, conduisent celui-ci à mettre en œuvre les étapes du procédé selon l'invention.

Un quatrième aspect de l'invention concerne un support d'enregistrement lisible par ordinateur comprenant des instructions qui, lorsqu'elles sont exécutées par un ordinateur, conduisent celui-ci à mettre en œuvre les étapes du procédé selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 est un schéma synoptique illustrant l'enchaînement des étapes d'un procédé selon l'invention.
- La figure 2 montre une représentation schématique d'un système selon l'invention.

### DESCRIPTION DETAILLEE

Sauf précision contraire, un même élément apparaissant sur des figures différentes présente une référence unique.

Un premier aspect de l'invention concerne un procédé de suivi de la configuration d'un moteur d'aéronef sur lequel est montée une pluralité d'équipements.

On entend par « configuration d'un moteur », la liste comportant un ensemble unique de données d'identification pour chaque équipement monté sur le moteur. L'ensemble de données d'identification d'un équipement comporte par exemple son numéro de série, sa référence, son numéro de production, son fabricant et/ou sa date de fabrication.

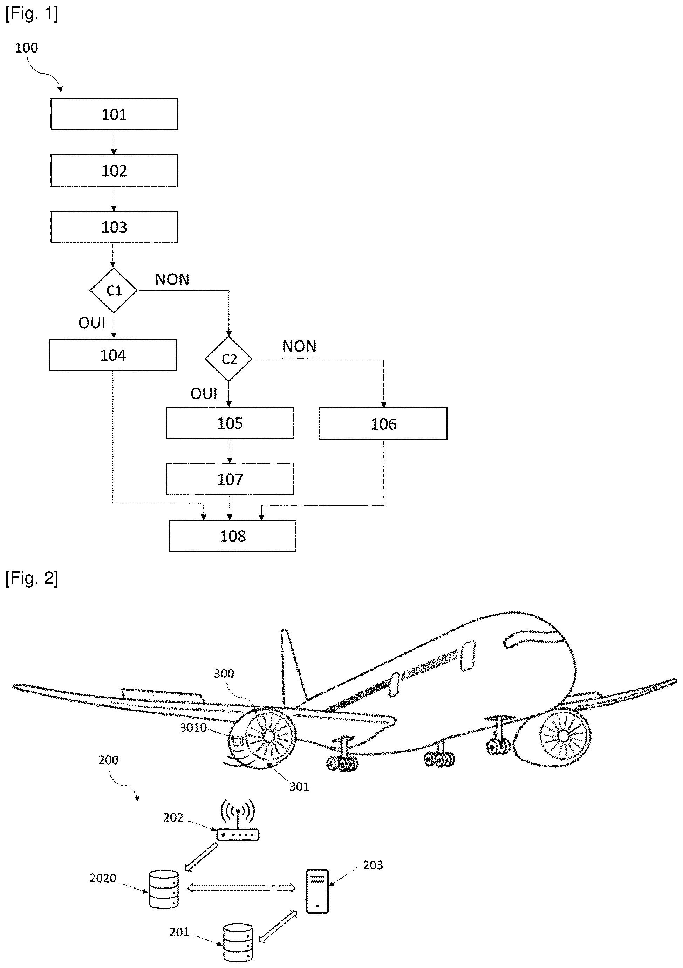

[Fig. 2] La figure 2 montre une représentation schématique d'un moteur 300 d'aéronef.

Sur la figure 2, l'aéronef est un avion comportant deux moteurs 300 sur lesquels est montée une pluralité d'équipements 301.

Le moteur 300 est associé à une configuration de référence correspondant à la configuration obtenue lors d'une précédente opération d'inventaire du moteur 300.

La configuration de référence comporte une date de dernière mise à jour correspondant par exemple à la date de réalisation de la précédente opération d'inventaire et un ensemble de données d'identification de référence pour chaque équipement 301 du moteur 300.

La configuration de référence a par exemple été certifiée par un opérateur humain.

La configuration de référence est par exemple stockée dans une base de données de configuration 201.

Chaque équipement 301 du moteur 300 présente un dispositif de radio-identification 3010.

Le dispositif de radio-identification 3010 est par exemple une puce ou une étiquette de radio-identification ou RFID pour « Radio Frequency Identification » en anglais.

[Fig. 1] La figure 1 est un schéma synoptique illustrant l'enchaînement des étapes du procédé 100 selon l'invention.

Une première étape 101 du procédé 100 selon l'invention consiste à obtenir une configuration en lisant automatiquement chaque dispositif de radio-identification 3010 du moteur 300.

La configuration comprend chaque ensemble de données d'identification obtenu par lecture du dispositif de radio-identification 3010 correspondant, et donc au moins un ensemble de données d'identification lu pour chaque équipement 301 du moteur 300.

Dans le cas nominal, un équipement 301 du moteur 300 est associé à un unique ensemble de données d'identification dans la configuration.

Un équipement 301 du moteur 300 peut toutefois être associé à une pluralité d'ensembles de données d'identification, par exemple dans le cas où un dispositif de radio-identification 3010 d'une version précédente de l'équipement maintenant retirée du moteur 300 est tombé dans le moteur 300.

La configuration comprend également une date de réalisation correspondant par exemple à la date de réalisation de la lecture automatique.

Le procédé 100 selon l'invention peut comporter une deuxième étape 102 consistant à stocker la configuration obtenue à la première étape 101 dans une base de données tampon 2020.

La base de données tampon 2020 est alors indépendante de la base de données de configuration 201 dans laquelle est stockée la configuration de référence associée au moteur 300.

Une troisième étape 103 du procédé 100 selon l'invention consiste pour chaque équipement 301 du moteur 300, à comparer l'ensemble de données d'identification lu obtenu à la première étape 101 pour l'équipement 301 et l'ensemble de données d'identification de référence correspondant à l'équipement 301 dans la configuration de référence.

Si une première condition C1 est vérifiée, une quatrième étape 104 du procédé 100 selon l'invention est réalisée.

La première condition C1 est vérifiée si pour chaque équipement 301 du moteur 300, l'ensemble de données d'identification lu obtenu à la première étape 101 pour l'équipement 301 est identique à l'ensemble de données d'identification de référence correspondant à l'équipement 301 dans la configuration de référence.

La quatrième étape 104 du procédé 100 selon l'invention consiste à remplacer la date de dernière mise à jour de la configuration de référence par la date de réalisation de la configuration obtenue à la première étape 101.

La première condition C1 n'est pas vérifiée s'il existe au moins un équipement 301 du moteur 300 pour lequel l'ensemble de données d'identification lu obtenu à la première étape 101 pour l'équipement 301 est différent de l'ensemble de données d'identification de référence correspondant à l'équipement 301 dans la configuration de référence.

C'est notamment le cas si un équipement 301 du moteur 300 est associé à une pluralité d'ensembles de données d'identification dans la configuration obtenue à la première étape 101.

Pour chaque équipement 301 du moteur 300 pour lequel l'ensemble de données d'identification lu obtenu à la première étape 101 pour l'équipement 301 est différent de l'ensemble de données d'identification de référence correspondant à l'équipement 301 dans la configuration de référence, une cinquième étape 105 du procédé 100 selon l'invention est réalisée si une deuxième condition C2 est vérifiée pour l'équipement 301.

La deuxième condition C2 est vérifiée pour l'équipement 301 si une opération de remplacement de l'équipement 301 a eu lieu entre la date de dernière mise à jour comprise dans la configuration de référence et la date de réalisation de la configuration obtenue à la première étape 101, et que l'ensemble de données d'identification lu obtenu à la première étape 101 pour l'équipement 301 correspond à un ensemble de données d'identification de remplacement associé à l'opération de remplacement.

On entend par « opération de remplacement d'un équipement », une opération consistant à remplacer un équipement installé sur le moteur par un nouvel équipement.

L'ensemble de données d'identification de remplacement associé à l'opération de remplacement correspond alors par exemple à l'ensemble de données d'identification du nouvel équipement.

Une telle opération de remplacement est certifiée par un opérateur humain et est, par exemple, intervenue dans le cadre d'une demande d'intervention ou d'une demande de maintenance.

La cinquième étape 105 du procédé 100 selon l'invention consiste à remplacer l'ensemble de données d'identification de référence correspondant à l'équipement 301 dans la configuration de référence par l'ensemble de données d'identification lu obtenu à la première étape 101 pour l'équipement 301.

Si la deuxième condition C2 n'est pas vérifiée pour l'équipement 301, c'est-à-dire si aucune opération de remplacement de l'équipement 301 n'a eu lieu entre la date de dernière mise à jour comprise dans la configuration de référence et la date de réalisation de la configuration obtenue à la première étape 101, ou si une opération de remplacement de l'équipement 301 a eu lieu entre la date de dernière mise à jour et la date de réalisation mais que l'ensemble de données d'identification lu obtenu à la première étape 101 pour l'équipement 301 ne correspond pas à l'ensemble de données d'identification de remplacement associé à l'opération de remplacement , une sixième étape 106 du procédé 100 selon l'invention est réalisée.

La sixième étape 106 consiste à générer une alerte.

La génération d'une alerte peut par exemple entraîner une opération d'inventaire, c'est-à-dire une vérification de la configuration du moteur 300, par un opérateur humain comme dans l'art antérieur.

Le procédé 100 selon l'invention comporte une septième étape 107 si au moins un ensemble de données d'identification de référence a été remplacé dans la configuration de référence, c'est-à-dire si la cinquième étape 105 a été réalisée pour au moins un équipement 301 du moteur 300.

La septième étape 107 consiste à remplacer la date de dernière mise à jour de la configuration de référence par la date de réalisation de la configuration obtenue à la première étape 101.

Dans le cas où le procédé 100 selon l'invention comporte la deuxième étape 102, le procédé 100 selon l'invention peut comporter une huitième étape 108 finale consistant à supprimer la configuration obtenue à la première étape 101 de la base de données tampon 2020.

Un deuxième aspect de l'invention concerne un système 200 de suivi de la configuration du moteur 300 adapté à la mise en œuvre du procédé 100 selon l'invention.

Comme illustré sur la figure 2, le système 200 selon l'invention comporte :
- la base de données de configuration 201 ;
- la base de données tampon 2020 ;
- un module de lecture radio 202 configuré pour mettre en œuvre la première étape 101 du procédé 100 selon l'invention ;
- un module de traitement 203 configuré pour mettre en œuvre toutes les étapes du procédé 100 selon l'invention excepté la première étape 101.

Le module de traitement 203 comporte par exemple au moins un processeur et une mémoire.

La base de données de configuration 201 stocke par exemple en outre un historique des configurations du moteur 300, c'est-à-dire l'ensemble des équipements ayant été monté sur le moteur 300.

La base de données de configuration 201 est par exemple chiffrée, par exemple par chiffrement fort, par exemple par un chiffrement AES-256 bits.

La base de données de configuration 201 présente par exemple un contrôle d'accès par authentification.

La base de données de configuration 201 et la base de données tampon 2020 peuvent être deux bases de données distinctes comme représenté sur la figure 2, ou bien deux parties indépendantes d'une même base de données.

La base de données tampon 2020 peut par exemple être comprise dans le module de lecture radio 202.

Le système 200 selon l'invention comporte en outre un réseau de télécommunications configuré pour assurer les communications au sein du système 200, c'est-à-dire pour permettre l'échange de messages au sein du système 200. Pour cela, le réseau de télécommunications utilise un protocole de communication.

Comme illustré sur la figure 2, le réseau de télécommunications permet par exemple d'assurer la communication entre le module de lecture radio 202 et la base de données tampon 2020, la communication entre le module de traitement 203 et la base de données tampon 2020 et la communication entre le module de traitement 203 et la base de données de configuration 201.

Le réseau de télécommunications peut être un réseau filaire ou un réseau sans fil.

Le réseau de télécommunications peut être le réseau Internet et peut comporter un nuage informatique ou « cloud » en anglais.

La base de données de configuration 201 peut être hébergée dans le nuage informatique.

Le protocole de communication est par exemple chiffré de bout de bout, par exemple à double clés d'authentification.

Les messages échangés sont par exemple transmis sous la forme de trames. Chaque trame comporte par exemple en plus du contenu du message, des informations d'adresse du destinataire comportant par exemple une clé publique, le standard de communication utilisé, un identifiant du message, un horodatage, une signature électronique vérifiable de l'émetteur générée par exemple par une clé privée.

Chaque trame peut être chiffrée, par exemple sous forme de code de hachage, par exemple via un arbre de Merkel.

Le protocole de communication peut mettre en œuvre une méthode de consensus, par exemple par notariat et tiers de confiance, par preuve d'enjeux ou par preuve de travail.

Le protocole de communication assure par exemple la distribution, la synchronisation, la réplication et la vérification des messages transmis au sein du réseau de télécommunications de manière que la transmission des messages soit transactionnelle et non répudiable.

Le réseau de télécommunications comprend au moins un nœud de télécommunications.

Chaque nœud de télécommunications peut être hébergé au sein du système 200 selon l'invention, par exemple derrière des pare-feux ou sur le module de lecture radio 202, ou sur le nuage informatique.

Chaque nœud de télécommunications stocke par exemple une copie synchronisée d'un contrat autoexécutant, autrement appelé contrat intelligent pour « smart contract » en anglais, partagé par le réseau de télécommunications.

Le contrat autoexécutant est par exemple configuré pour vérifier la validité des messages transmis au sein du réseau de télécommunications, c'est-à-dire à vérifier leur conformité pour parvenir à un consensus.

## Revendications

1. Procédé (100) de suivi de la configuration d'un moteur (300) d'aéronef comprenant une pluralité d'équipements (301), chaque équipement (301) présentant un dispositif de radio-identification (3010), le procédé (100) comportant une étape (101) de lecture automatique de chaque dispositif de radio-identification (3010) pour obtenir une configuration comprenant au moins un ensemble de données d'identification lu pour chaque équipement (301) et une date de réalisation, le moteur (300) étant associé à une configuration de référence comprenant une date de dernière mise à jour et pour chaque équipement (301), un ensemble de données d'identification de référence de l'équipement (301), et le procédé comportant les étapes suivantes :
- Pour chaque équipement (301), comparaison (103) entre l'ensemble de données lu et l'ensemble de données d'identification de référence correspondant à l'équipement (301) :
∘ Si pour chaque équipement (301), l'ensemble de données d'identification lu est identique à l'ensemble de données d'identification de référence (C1), remplacement (104) de la date de dernière mise à jour de la configuration de référence par la date de réalisation de la configuration obtenue ;
∘ Sinon, pour chaque équipement (301) pour lequel l'ensemble de données d'identification lu est différent de l'ensemble de données d'identification de référence :
➢ Si une opération de remplacement de l'équipement (301) a eu lieu entre la date de dernière mise à jour et la date de réalisation et que l'ensemble de données d'identification lu correspond à un ensemble de données d'identification de remplacement associé à l'opération de remplacement (C2), remplacement (105) de l'ensemble de données d'identification de référence par l'ensemble de données d'identification lu ;
➢ Sinon, génération (106) d'une alerte ;
∘ Si au moins un ensemble de données d'identification de référence a été remplacé, remplacement (107) de la date de dernière mise à jour de la configuration de référence par la date de réalisation de la configuration obtenue.

2. Procédé (100) selon la revendication 1, dans lequel la configuration de référence est stockée dans une base de données de configuration (201), le procédé (100) comprenant en outre une étape (102) de stockage de la configuration obtenue dans une base de données tampon (2020) indépendante de la base de données de configuration (201).

3. Procédé (100) selon la revendication 2, comprenant en outre une étape (108) de suppression de la configuration obtenue de la base de données tampon (2020).

4. Système (200) de suivi de la configuration d'un moteur (300) d'aéronef comprenant une pluralité d'équipements (301), chaque équipement (301) présentant un dispositif de radio-identification (3010), le système (200) comprenant un module de lecture radio (202) configuré pour lire automatiquement pour chaque équipement (301), le dispositif de radio-identification (3010) correspondant pour obtenir un ensemble de données d'identification lu pour l'équipement (301), le système (200) comportant :
- Une base de données de configuration (201) configurée pour stocker une configuration de référence associée au moteur (300), la configuration de référence comprenant une date de dernière mise à jour et pour chaque équipement (301), un ensemble de données d'identification de référence de l'équipement (301) ;
- Une base de données tampon (2020) configurée pour stocker une configuration comprenant une date de réalisation et chaque ensemble de données d'identification lu à l'aide du module de lecture radio (202), la base de données tampon (2020) étant indépendante de la base de données de configuration (201) ;
- Un module de traitement (203) configuré pour, pour chaque équipement (301), comparer l'ensemble de données d'identification lu et l'ensemble **de données** d'identification de référence correspondant à l'équipement (301) :
∘ Si pour chaque équipement (301), l'ensemble de données d'identification lu est identique à l'ensemble de données d'identification de référence, remplacer la date de dernière mise à jour de la configuration de référence par la date de réalisation de la configuration ;
∘ Sinon, pour chaque équipement (301) pour lequel l'ensemble de données d'identification lu est différent de l'ensemble de données d'identification de référence :
> Si une opération de remplacement de l'équipement (301) a eu lieu entre la date de dernière mise à jour et la date de réalisation et que l'ensemble de données d'identification lu correspond à un ensemble de données d'identification de remplacement associé à l'opération de remplacement, remplacer l'ensemble de données d'identification de référence par l'ensemble de données d'identification lu ;
> Sinon, générer une alerte ;
∘ Si au moins un ensemble de données d'identification de référence a été remplacé, remplacer la date de dernière mise à jour de la configuration de référence par la date de réalisation de la configuration.

5. Système (200) selon la revendication 4, dans lequel la base de données de configuration (201) est chiffrée et/ou présente un contrôle d'accès par authentification.

6. Système (200) selon l'une quelconque des revendications 4 ou 5, comprenant un réseau de télécommunications configuré pour permettre les échanges de messages entre le module de lecture radio (202) et la base de données tampon (2020) et entre le module de traitement (203), la base de données de configuration (201) et la base de données tampon (2020), via un protocole de communication.

7. Système (200) selon la revendication 6, dans lequel le protocole de communication est chiffré de bout en bout.

8. Système (200) selon l'une quelconque des revendications 6 ou 7, dans lequel le réseau de télécommunications comprend au moins un nœud de télécommunications, chaque nœud de télécommunications stockant une copie synchronisée d'un contrat autoexécutant configuré pour vérifier la validité des messages transmis au sein du réseau de télécommunications.

9. Produit-programme d'ordinateur comprenant des instructions qui, quand le programme est exécuté sur un ordinateur, conduisent celui-ci à mettre en œuvre les étapes du procédé (100) selon l'une quelconque des revendications 1 à 3.

10. Support d'enregistrement lisible par ordinateur comprenant des instructions qui, lorsqu'elles sont exécutées par un ordinateur, conduisent celui-ci à mettre en œuvre les étapes du procédé (100) selon l'une quelconque des revendications 1 à 3.

## Patentansprüche

1. Verfahren (100) zur Überwachung der Konfiguration eines Flugzeugtriebwerks (300) mit einer Vielzahl von Geräten (301), wobei jedes Gerät (301) eine Funkidentifikationsvorrichtung (3010) aufweist und das Verfahren (100) einen Schritt (101) des automatischen Lesens jeder Funkidentifikationsvorrichtung (3010) umfasst, um eine Konfiguration zu erhalten, die mindestens einen für jedes Gerät (301) gelesenen Identifikationsdatensatz, und ein Ausführungsdatum umfasst, wobei das Triebwerk (300) mit einer ein Datum der letzten Aktualisierung umfassenden Referenzkonfiguration assoziiert ist und für jedes Gerät (301) einen Referenz-Identifikationsdatensatz (301) umfasst, und wobei das Verfahren die folgenden Schritte umfasst:
- Für jedes Gerät (301) Vergleich (103) zwischen dem gelesenen Datensatz und dem dem Gerät (301) entsprechenden Referenz-Identifikationsdatensatz (301):
∘ Wenn der gelesene Identifikationsdatensatz für jedes Gerät (301) mit dem Referenz-Identifikationsdatensatz (C1) übereinstimmt, Ersetzen (104) des Datums der letzten Aktualisierung der Referenzkonfiguration durch das Datum der Ausführung der erhaltenen Konfiguration;
∘ Andernfalls für jedes Gerät (301), bei dem sich der gelesene Identifikationsdatensatz vom Referenz-Identifikationsdatensatz unterscheidet:
> Wenn zwischen dem Datum der letzten Aktualisierung und dem Datum der Ausführung das Gerät (301) ausgetauscht wurde und der gelesene Identifikationsdatensatz einem Ersatzidentifikationsdatensatz entspricht, der mit dem Vorgang des Austausches (C2) assoziiert ist, Ersatz (105) des ReferenzIdentifikationsdatensatzes durch den gelesenen Identifikationsdatensatz;
> Andernfalls Erzeugung (106) einer Warnmeldung;
∘ Wenn mindestens ein Referenz-Identifikationsdatensatz ersetzt wurde, Ersatz (107) des Datums der letzten Aktualisierung der Referenzkonfiguration durch das Datum der Ausführung der erhaltenen Konfiguration.

2. Verfahren (100) nach Anspruch 1, bei dem die Referenzkonfiguration in einer Konfigurationsdatenbank (201) gespeichert ist, wobei das Verfahren (100) außerdem einen Schritt (102) zum Speichern der erhaltenen Konfiguration in einer von der Konfigurationsdatenbank (201) unabhängigen Pufferdatenbank (2020) umfasst.

3. Verfahren (100) nach Anspruch 2, das außerdem einen Schritt (108) zum Löschen der aus der Pufferdatenbank (2020) erhaltenen Konfiguration umfasst.

4. System (200) zur Überwachung der Konfiguration eines Flugzeugtriebwerks (300) mit einer Vielzahl von Geräten (301), wobei jedes Gerät (301) mit einer Funkidentifikationsvorrichtung (3010) ausgestattet ist, wobei das System (200) ein Funklesemodul (202) umfasst, das so konfiguriert ist, dass es für jedes Gerät (301) automatisch die entsprechende Funkidentifikationsvorrichtung (3010) ablesen kann, um einen für das Gerät (301) abgelesenen Identifikationsdatensatz zu erhalten, wobei das System (200) umfasst:
- Eine Konfigurationsdatenbank (201), die so konfiguriert ist, dass sie eine mit dem Triebwerk (300) assoziierte Referenzkonfiguration speichert, wobei die Referenzkonfiguration ein Datum der letzten Aktualisierung und für jedes Gerät (301) einen Referenzidentifikationsdatensatz für das Gerät (301) umfasst;
- Eine Pufferdatenbank (2020), die so konfiguriert ist, dass sie eine Konfiguration speichert, die ein Ausführungsdatum und jeden mithilfe des Funklesemoduls (202) gelesenen Identifikationsdatensatz umfasst, wobei die Pufferdatenbank (2020) von der Konfigurationsdatenbank (201) unabhängig ist;
- ein Verarbeitungsmodul (203), das so konfiguriert ist, dass es für jedes Gerät (301) den gelesenen Identifikationsdatensatz und den dem Gerät (301) entsprechenden Referenzidentifikationsdatensatz vergleicht:
∘ Wenn der gelesene Identifikationsdatensatz für jedes Gerät (301) mit dem Referenzidentifikationsdatensatz übereinstimmt, wird das Datum der letzten Aktualisierung der Referenzkonfiguration durch das
∘ Andernfalls erfolgt für jedes Gerät (301), bei dem sich der gelesene Identifikationsdatensatz vom Referenzidentifikationsdatensatz unterscheidet:
> Wenn zwischen dem Datum der letzten Aktualisierung und dem Datum der Ausführung ein Austausch des Geräts (301) stattgefunden hat und der gelesene Identifikationsdatensatz mit einem mit dem Austauschvorgang assoziierten Identifikationsdatensatz übereinstimmt, Austausch des Referenzidentifikationsdatensatzes durch den gelesenen Identifikationsdatensatz;
> Andernfalls Ausgabe einer Warnmeldung;
∘ Wenn mindestens ein Referenzidentifikationsdatensatz ersetzt wurde, Ersetzen des Datums der letzten Aktualisierung der Referenzkonfiguration durch das Datum der Ausführung der Konfiguration.

5. System (200) nach Anspruch 4, bei dem die Konfigurationsdatenbank (201) verschlüsselt ist und/oder eine Zugangskontrolle durch Authentifizierung aufweist.

6. System (200) nach einem der Ansprüche 4 oder 5, ein Telekommunikationsnetzwerk umfassend, das so konfiguriert ist, dass es über ein Kommunikationsprotokoll den Austausch von Nachrichten zwischen dem Funklesemodul (202) und der Pufferdatenbank (2020) und zwischen dem Verarbeitungsmodul (203), der Konfigurationsdatenbank und der Pufferdatenbank (2020) ermöglicht.

7. System (200) nach Anspruch 6, bei dem das Kommunikationsprotokoll durchgehend verschlüsselt ist.

8. System (200) nach einem der Ansprüche 6 oder 7, bei dem das Telekommunikationsnetzwerk mindestens einen Telekommunikationsknoten umfasst, wobei jeder Telekommunikationsknoten eine synchronisierte Kopie eines selbstausführenden Vertrags speichert, der so konfiguriert ist, dass er die Gültigkeit der innerhalb des Telekommunikationsnetzwerks übertragenen Nachrichten überprüft.

9. Computerprogrammprodukt mit Anweisungen, die, wenn das Programm auf einem Computer ausgeführt wird, diesen veranlassen, die Schritte des Verfahrens (100) gemäß einem der Ansprüche 1 bis 3 durchzuführen.

10. Computerlesbares Aufzeichnungsmedium mit Anweisungen, die, wenn sie von einem Computer ausgeführt werden, diesen veranlassen, die Schritte des Verfahrens (100) nach einem der Ansprüche 1 bis 3 durchzuführen.

## Claims

1. A method (100) for monitoring configuration of an aircraft engine (300) comprising a plurality of pieces of equipment (301), each piece of equipment (301) having a radio identification device (3010), the method (100) including a step (101) of automatically reading each radio identification device (3010) to obtain a configuration comprising at least one set of identification data read for each piece of equipment (301) and a date of execution, the engine (300) being associated with a reference configuration comprising a date of last update and, for each piece of equipment (301), a set of reference identification data of the piece of equipment (301), and the method comprising the following steps of:
- for each piece of equipment (301), comparing (103) the set of data read and the set of reference identification data corresponding to the piece of equipment (301):
∘ if, for each piece of equipment (301), the set of identification data read is identical to the set of reference identification data (C1), replacing (104) the date of last update of the reference configuration by the date of execution of the configuration obtained;
∘ otherwise, for each piece of equipment (301) for which the set of identification data read is different from the set of reference identification data:
➢ if an operation for replacing the piece of equipment (301) has taken place between the date of last update and the date of execution and the set of identification data read corresponds to a set of replacement identification data associated with the replacement operation (C2), replacing (105) the set of reference identification data by the set of identification data read;
➢ otherwise, generating (106) an alert;
∘ if at least one set of reference identification data has been replaced, replacing (107) the date of last update of the reference configuration by the date of execution of the configuration obtained.

2. The method (100) according to claim 1, wherein the reference configuration is stored in a configuration database (201), the method (100) further comprising a step (102) of storing the configuration obtained in a buffer database (2020) independent of the configuration database (201).

3. The method (100) according to claim 2, further comprising a step (108) of deleting the configuration obtained from the buffer database (2020).

4. A system (200) for monitoring configuration of an aircraft engine (300) comprising a plurality of pieces of equipment (301), each piece of equipment (301) having a radio identification device (3010), the system (200) comprising a radio reading module (202) configured to automatically read, for each piece of equipment (301), the corresponding radio identification device (3010) to obtain a set of identification data read for the piece of equipment (301), the system (200) comprising:
- a configuration database (201) configured to store a reference configuration associated with the engine (300), the reference configuration comprising a date of last update and, for each piece of equipment (301), a set of reference identification data of the piece of equipment (301);
- a buffer database (2020) configured to store a configuration comprising a date of execution and each set of identification data read using the radio reading module (202), the buffer database (2020) being independent of the configuration database (201);
- a processing module (203) configured to, for each piece of equipment (301), compare the set of identification data read and the set of reference identification data corresponding to the piece of equipment (301):
∘ if, for each piece of equipment (301), the set of identification data read is identical to the set of reference identification data, replace the date of last update of the reference configuration by the date of execution of the configuration;
∘ otherwise, for each piece of equipment (301) for which the set of identification data read is different from the set of reference identification data:
➢ if an operation for replacing the piece of equipment (301) has taken place between the date of last update and the date of execution and the set of identification data read corresponds to a set of replacement identification data associated with the replacement operation, replace the set of reference identification data by the set of identification data read;
➢ otherwise, generate an alert;
∘ if at least one set of reference identification data has been replaced, replace the date of last update of the reference configuration by the date of execution of the configuration.

5. The system (200) according to claim 4, wherein the configuration database (201) is encrypted and/or has authentication access control.

6. The system (200) according to any of claims 4 or 5, comprising a telecommunications network configured to allow message exchanges between the radio reading module (202) and the buffer database (2020) and between the processing module (203), the configuration database (201) and the buffer database (2020), via a communication protocol.

7. The system (200) according to claim 6, wherein the communication protocol is end-to-end encrypted.

8. The system (200) according to any of claims 6 or 7, wherein the telecommunications network comprises at least one telecommunications node, each telecommunications node storing a synchronised copy of a self-executing contract configured to verify validity of messages transmitted within the telecommunications network.

9. A computer program product comprising instructions which, when the program is executed on a computer, cause the same to implement the steps of the method (100) according to any of claims 1 to 3.

10. A computer-readable recording medium comprising instructions which, when executed by a computer, cause the same to implement the steps of the method (100) according to any of claims 1 to 3.
